# FASCICULE DE BREVET EUROPEEN

(11) **EP 0 693 163 B1**
(45) Date de publication et mention de la délivrance du brevet: **16.09.1998**
(21) Numéro de dépôt: 95908307.2
(22) Date de dépôt: 02.02.1995
(51) Int. Cl.: F16B 19/10

(54) **RIVETS-CLOUS ET PROCEDES DE MISE EN OEUVRE DE CEUX-CI**
NIETNÄGEL, SOWIE ANWENDUNGSVERFAHREN
COMBINED RIVET/NAIL COMPONENTS AND METHODS FOR USING SAME

(30) Priorité: 09.02.1994 FR 9401452
(43) Date de publication de la demande: 24.01.1996
(73) Titulaire: Aser, F-42405 Saint-Chamond (FR)
(72) Inventeur: JAKOB, Horst, F-30360 Deaux (FR)
(74) Mandataire: Simonnot, Bernard
(86) Numéro de dépôt international: FR9500132
(87) Numéro de publication internationale: WO9522008

(56) Documents cités:
- DE-A- 1 752 343
- FR-A- 2 106 270
- US-A- 3 494 246
- US-A- 4 355 531
- US-A- 5 333 980
- PATENT ABSTRACTS OF JAPAN vol. 15 no. 182 (M-1111) ,10 Mai 1991 & JP,A,03 043105 (MITSUBISHI MATERIALS CORP) 25 Février 1991,

## Description

La présente invention se rapporte à un rivet, caractérisé en ce qu'il est composé de deux parties, formant deux pièces séparées, dont l'une est un rivet creux comportant une tête, une tige cylindrique et le cas échéant un épaulement périphérique sur le côté extérieur de sa tige cylindrique, et dont l'autre partie est un clou cylindrique creux sans tête, dont une extrémité est effilée et de préférence pointue, l'autre extrémité, creuse, ayant une dimension intérieure telle qu'elle autorise l'enfilage ajusté du clou creux sur la partie formant un rivet creux jusqu'à l'épaulement de celle-ci ou jusqu'à la tête de celle-ci.

L'invention concerne également diverses variantes de rivets selon l'invention ainsi que des procédés de mise en oeuvre des rivets selon l'invention.

On connaît de nombreuses sortes de rivets. La présente invention concerne les rivets destinés à l'assemblage de produits en bande, ou en feuilles et en particulier à celui d'agrafes de jonctionnement ou d'autres moyens de jonctionnement pour bandes transporteuses avec les extrémités de celles-ci. Diverses sortes de rivets ont été employées jusqu'ici dans ce but. Il existe des rivets en une seule pièce dont une extrémité comporte une tête préformée, ces rivets étant susceptibles d'être enfilés dans des trous réalisés au préalable dans les matériaux en feuille ou en bande qu'il s'agit d'assembler, ainsi que dans les agrafes de jonctionnement ou dans les autres moyens de jonctionnement, l'extrémité ne comportant pas de tête préformée, dépassant de l'autre côté des matériaux à assembler, étant matée au marteau afin de former une tête de cet autre côté. Ces rivets couramment connus et utilisés de longue date présentent l'inconvénient consistant en ce qu'ils nécessitent successivement l'accès à une face de l'ensemble de matériaux à assembler puis à l'autre face. Ceci n'est pas pratique dans de nombreux cas d'utilisation, et en particulier dans le cas où il s'agit d'assembler des moyens de jonctionnement pour bandes transporteuses avec les extrémités des bandes transporteuses.

Les conditions d'exécution de ces travaux s'avèrent la plupart du temps difficiles (exiguïté des lieux en particulier dans les mines). Mais même dans d'autres conditions, par exemple à l'air libre ou dans de grands ateliers industriels, la manipulation des extrémités de bandes transporteuses de grandes largeurs n'est pas aisée. C'est pourquoi on a cherché des solutions pour opérer la mise en place d'un rivet à partir d'une seule face des matériaux à assembler ainsi que son rivetage, sans avoir accès à l'autre face des matériaux à assembler. C'est ainsi que le brevet des Etats-Unis d'Amérique n° US-A-3 913 180 a proposé un rivet creux muni d'une enclume provisoire enfilée dans l'extrémité creuse dudit rivet creux. Ce rivet-enclume est enfoncé dans des trous réalisés au préalable dans les matériaux à assembler. La tête du rivet creux est alors battue contre l'enclume qui après avoir traversé les matériaux est venue s'insérer dans les trous ménagés dans une plaque de support, selon le dessin des trous pratiqués dans les matériaux à assembler, l'enclume circulaire étant appuyée sur le support grâce à une collerette dont l'autre côté, généralement conique, sert de surface d'enclume. En battant la tête du rivet située sur la face par laquelle l'enclume et le rivet ont été enfoncés dans les trous pratiqués à l'avance, l'extrémité cylindrique, creuse opposée du rivet creux est poussée contre les parois inclinées du côté supérieur de la collerette de l'enclume et forme une tête qui pince les matériaux à assembler en conjugaison avec la tête du rivet réalisée à l'avance, située sur l'autre face de l'ensemble de matériaux à assembler. L'enclume se trouve alors libérée et peut être mise au rebut. Ce rivet a été beaucoup utilisé mais il présente de nombreux inconvénients. En particulier il est indispensable que toutes les couches de produits ou de matériaux à assembler comportent des trous réalisés au préalable.

Le document US-A-4.355.531, qui est le document antérieur le plus proche de la présente demande et qui sert de base au préambule de la revendication 1 décrit un rivet composé de deux parties, un rivet proprement dit 201 et une tige formant noyau 202. Ces deux parties sont solidement préassemblées avant la pose du rivet au moyen d'une déformation de l'extrémité de la partie cylindrique creuse de la pièce 201 qui pénètre dans une gorge pratiquée dans la pièce 202. La partie 202 est pleine. La fonction de la pièce 202 est, lors de l'opération de rivetage, de refouler énergiquement le métal de l'extrémité de la pièce 201 en le faisant fluer, ce que l'on appelle également un refoulement du métal. Cependant le rivet proposé exige des moyens très puissants, pour l'application du rivet, et de plus la partie pleine 202 n'est pas apte à percer le matériaux à assembler. Elle n'est pas non plus apte à se déformer lors de l'opération de rivetage. C'est pourquoi la présente demande fait appel, pour un rivet en deux pièces préassemblées, à une conception nouvelle de la formation de la seconde tête d'assemblage, impliquant des caractéristiques très particulières, et nouvelles, de la seconde partie du rivet préassemblé ainsi que de son préassemblage avec la première partie.

La présente invention a donc pour but de proposer une solution à ces problèmes consistant à créer un rivet dont le rivetage puisse être effectué de façon simple et économique en main d'oeuvre, à partir d'un seul et même côté des matériaux à assembler, sans qu'il soit nécessaire de pratiquer des trous à l'avance dans tous les matériaux à assembler, le rivetage obtenu devant être d'excellente qualité.

Le problème ainsi posé est résolu,selon la présente invention, au moyen d'un rivet comportant deux parties, formant deux pièces distinctes :
- une partie formant rivet creux présentant une tête et une tige cylindrique qui est raccordée à la tête dans le sens axial et dont l'extrémité située à l'opposé de l'extrémité portant la tête comporte un espace cylindrique creux ménagé à l'intérieur de la tige cylindrique dans le sens axial de celle-ci, sur au moins une partie de la longueur de la tige cylindrique, et
- une deuxième partie préassemblée avec la première partie formant rivet creux à l'extrémité de la tige cylindrique,
ledit rivet étant caractérisé en ce que la deuxième partie est une partie formant clou comportant une tige cylindrique creuse se prolongeant de façon conique pour former une pointe, la partie formant clou étant enfilé avec frottement par son extrémité ouverte opposée à son extrémité formant une pointe sur la tige cylindrique de la partie formant rivet creux.

Ce rivet en deux parties peut, selon un procédé selon la présente invention, être enfoncé directement dans les matériaux à assembler lorsque ceux-ci se prêtent à la pénétration de la partie clou qui précède la partie rivet creux lors de l'enfilage du rivet-clou selon l'invention dans les différentes couches de produits à assembler, ou bien être enfilé dans des trous pratiqués à l'avance dans tout ou partie des matériaux qu'il s'agit d'assembler. Lorsque les produits à assembler comportent des pièces métalliques, ou en matière plastique dure, par exemple des agrafes de dispositifs de jonctionnement pour bandes transporteuses, ou d'autres moyens de jonctionnement, ou lorsque ces éléments de dispositifs de jonctionnement, même réalisés dans une matière susceptible de subir la pénétration de la partie clou du rivet-clou selon l'invention sont munis volontairement à l'avance de trous, souvent chemisés ou munis de bagues de renfort, il est également possible de mettre en place ces éléments de moyens de jonctionnement sur les extrémités de bandes transporteuses qu'il s'agit d'équiper et ensuite d'enfiler les rivets-clous d'abord dans les trous pratiqués à l'avance dans l'élément de dispositif de jonctionnement puis en battant la tête des rivets-clous, de leur faire traverser la bande transporteuse, la pointe de la partie clou traversant aisément le matériau de cette dernière, puis en le faisant passer dans un autre trou pratiqué à l'avance dans une autre aile d'un élément de jonction située sous la bande transporteuse.

La pointe du rivet-clou rencontre alors, dans tous les cas, que le rivet-clou ait été enfilé directement dans les matériaux à assembler ou dans les trous pratiqués à l'avance, la surface plane unie d'un support de travail servant d'enclume, sur lequel la pointe de la partie clou se déforme, puis la partie inférieure du rivet creux se déforme elle-même comme expliqué en détail plus loin. Ces déformations de la pointe de la partie clou et de la partie inférieure de la partie rivet creux entraînent un assemblage solide et sur des deux parties, avec formation d'une deuxième tête sous les couches de matériaux à assembler qui, associée à la première tête, pince celles-ci de façon robuste et sûre. Bien entendu d'autres moyens que le battage au marteau peuvent être employés, par exemple on peut utiliser des moyens de serrage hydrauliques ou pneumatiques, ou mécaniques qu'il est facile de régler de manière à déformer et serrer les rivets de façon réglable et définie à l'avance.

Comme on le verra dans des exemples décrits plus loin en rapport avec le dessin, différents moyens complémentaires peuvent être employés pour faciliter, ou pour parfaire la formation de la tête du côté clou du rivet; ainsi que la déformation de la partie rivet creux dans la tête de la partie clou. Par exemple des zones de pliures préférentielles, obtenues par des amincissements localisés de la paroi de la pointe de la partie clou permettent d'orienter le sens de la déformation de cette partie, vers l'intérieur, ou vers l'extérieur par exemple. L'adjonction d'une matière fluide, pâteuse, ou plastique dans l'espace intérieur fermé existant entre la partie rivet creux et la partie clou permet de favoriser la déformation de celle-ci en direction de l'extérieur, sous l'effet de la surpression engendrée lors de la mise en oeuvre d'un rivet réalisé de cette façon. Enfin pour obtenir, surtout dans le cas de grandes dimensions de rivets, un évasement parfait de la partie rivet creux à l'intérieur de la tête formée par la partie clou, on peut également insérer une bille à l'intérieur de la partie clou, ladite bille venant s'appuyer d'une part contre la paroi intérieure de la partie clou, sur une ligne de contact périphérique circulaire, et d'autre part contre l'extrémité creuse du rivet creux, le diamètre de la bille étant volontairement supérieur à celui de l'espace creux cylindrique de la partie rivet creux. On comprend que lors de la mise en oeuvre du rivet-clou selon l'invention cette bille applique sur l'ensemble de la périphérie de la partie clou ainsi que sur celle de l'extrémité de la partie rivet creux, l'ensemble des contraintes résultant du battage, ou du serrage du rivet-clou lors de sa mise en oeuvre. La qualité des déformations ainsi obtenues procure une liaison dont la robustesse est encore accrue, d'autant plus que la bille restant emprisonnée, toutes les parties des pièces restent parfaitement appliquées les unes contre les autres sans création progressive de jeu, lors du travail de la jonction de la bande transporteuse par exemple.

L'invention va être expliquée en rapport avec des exemples de réalisation, en conjugaison avec un dessin d'accompagnement.
La figure 1 représente la partie rivet creux d'un rivet-clou selon l'invention, vu en élévation, une partie étant représentée en coupe selon un plan diamétral,
la figure 2 représente la partie clou d'un rivet-clou selon l'invention, vu en élévation, en coupe selon un plan diamétral,
la figure 3 représente les différentes étapes de la mise en oeuvre d'un rivet-clou selon une forme de réalisation préférée de l'invention, le bas de la partie rivet se déformant vers l'intérieur dans le cas représenté sur la ligne d'opérations supérieure, et vers l'extérieur dans le cas de la ligne d'opérations inférieure,
la figure 4 représente, en élévation et en coupe longitudinale partielle, une variante de rivet-clou selon l'invention,
la figure 5 représente, en élévation et en coupe longitudinale partielle, encore une autre variante de rivet-clou selon l'invention, comportant une bille insérée entre la partie rivet creux et la partie clou, ainsi que les étapes de sa déformation au cours de l'opération de rivetage.

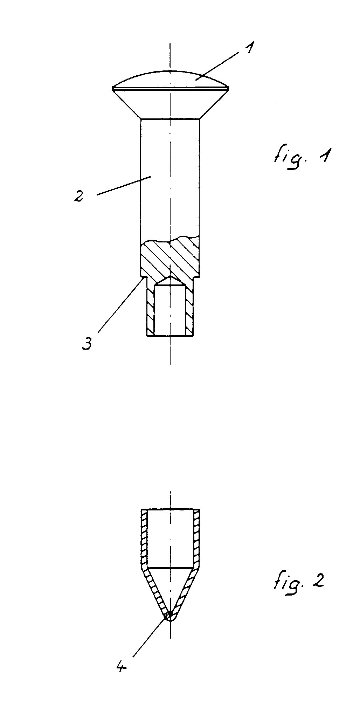

La partie rivet creux d'un rivet-clou selon l'invention, représentée sur la figure 1 comporte une tête 1, une tige cylindrique 2, creuse à son extrémité inférieure, sur le dessin, et un épaulement 3 pratiqué dans la surface cylindrique extérieure de la tige.

La partie clou creux d'un rivet-clou selon l'invention représentée sur la figure 2 comporte une partie conique creuse, se terminant par une pointe 4, et une partie cylindrique, également creuse, le diamètre intérieure de cette partie cylindrique étant choisi de façon telle qu'il est possible d'enfiler la partie clou sur la partie inférieure (sur le dessin) de la partie rivet creux, et ce jusqu'à l'épaulement 3, les deux pièces étant maintenues assemblées par la friction.

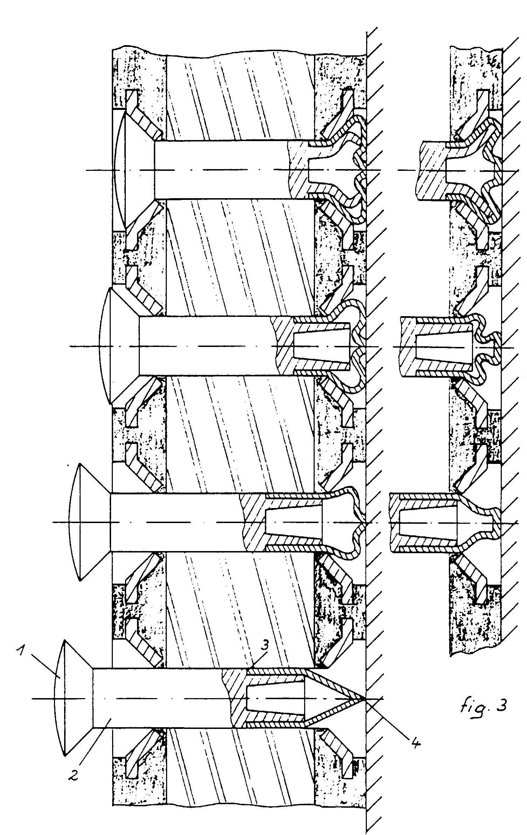

La figure 3 représente les étapes du rivetage d'un rivet selon l'invention composé du rivet creux selon la figure 1 et du clou creux selon la figure 2. Sur la première ligne d'opérations la partie conique du clou creux se déforme vers l'extérieur, tandis que sur la deuxième ligne d'opérations la partie conique du clou creux se déforme vers l'intérieur. Ces déformations peuvent être favorisées par des zones d'épaisseur réduite. Dans une variante perfectionnée de l'invention, la déformation est obtenue en direction de l'extérieur, en raison du fait qu'un produit approximativement incompressible, liquide ou pâteux a été inséré dans la partie creuse du rivet-clou constituée par la partie creuse de la partie rivet et par la partie creuse de la partie clou. On remarque sur la figure 3 que les trous ont été munis de rondelles de renfort qui servent également de surface d'appui pour la tête de la partie rivet creux et/ou pour la tête de la partie clou une fois celle-ci formée. Ces rondelles ont avantageusement une forme de cuvette dont la pente correspond à celle du côté inférieur de la tête, dans le cas où ce côté a une forme conique, ou tronconique, et dans d'autres versions elles peuvent combiner une partie cylindrique et une partie formant la rondelle proprement dite, plate, conique ou tronconique, la partie cylindrique servant au chemisage du trou traversant les épaisseurs et rejoignant éventuellement une partie cylindrique venant de l'autre côté, associée à une rondelle plate, conique ou tronconique.

Dans le même esprit, différentes combinaisons sont d'ailleurs possibles, allant d'un tube cylindrique nu aux extrémités servant au renfort des trous qu'il traverse et à l'appui direct des têtes, à des parties cylindriques formant une seule pièce avec une rondelle plate, conique ou tronconique située à une extrémité, et à des rondelles seules, comme représenté sur la figure 3.

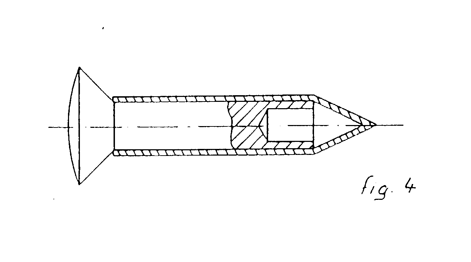

Dans la variante représentée sur la figure 4, la partie rivet creux ne comporte pas d'épaulement sur sa tige cylindrique 2, la partie clou étant enfilée sur cette tige cylindrique 2 jusqu'à ce qu'elle vienne en butée contre la face inférieure de la tête de la partie rivet creux. Sur la figure cette tête est représentée avec un côté inférieur parfaitement conique, il va de soi qu'elle peut également être tronconique de façon à ce que l'extrémité supérieure, sur le dessin, de la partie clou porte bien à plat sur la partie plane de ce côté inférieur tronconique de la tête de la partie rivet creux.

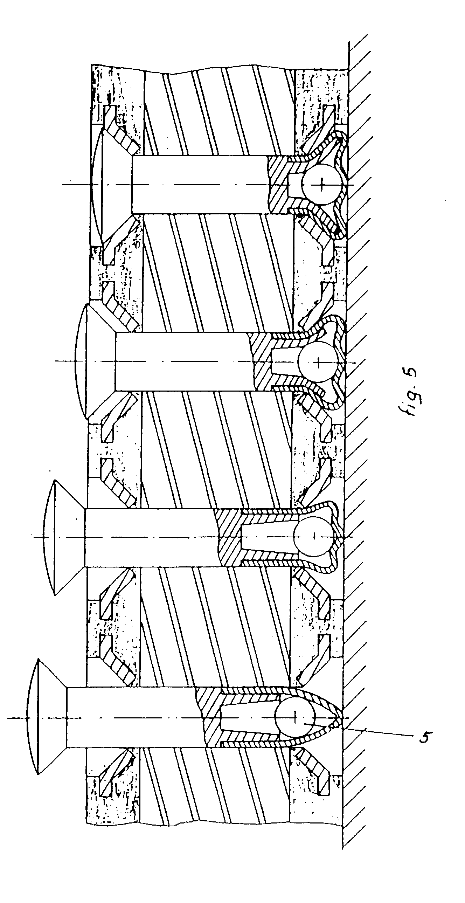

Enfin sur la figure 5, est représentée une variante de rivet-clou selon l'invention comportant, entre la partie clou et la partie rivet creux assemblées une bille par exemple en acier qui porte sur l'extrémité inférieure de la partie rivet creux par une ligne de contact circulaire, et sur la paroi intérieure de la partie clou. La figure montre que cette bille contribue au fur et à mesure de la déformation de la partie clou puis de la partie rivet creux, à assurer un contact uniforme sur toute la périphérie des deux parties qu'il s'agit d'assembler, en assurant ainsi une déformation uniformément répartie de ces deux parties du rivet-clou selon l'invention.

Il va de soi que l'adjonction de la bille, qui est faite lors de l'assemblage des deux parties est compatible avec l'adjonction d'un liquide ou d'un produit plastique approximativement incompressible évoquée précédemment, chaque adjonction jouant un rôle différent, mais contribuant chacune à la qualité de la jonction obtenue.

De plus la présence de la bille qui subsiste dans l'assemblage empêche l'apparition de jeux localisés dans l'assemblage, jeux qui se développeraient ensuite, lors du travail d'une jonction de bande transporteuse par exemple. Le fait que la bille continue de porter uniformément sur toute la périphérie a pour effet qu'il n'existe pas de possibilité de déformation locale et que pour venir a bout de l'assemblage sur toute la périphérie à la fois il faudrait des efforts très considérables qui ne se produisent pas dans la pratique.

Un perfectionnement supplémentaire peut être apporté aux rivets-clous selon l'invention. Il s'agit d'un traitement ayant pour but de durcir superficiellement le rivet-clou, en particulier la partie clou et surtout sa partie conique par un traitement sous plasma entraînant le dépôt d'une couche mince de nitrure de titane. Un autre traitement encore plus performant en combinaison avec les rivets-clous selon l'invention consiste à effectuer un revêtement chimique, assisté par plasma, de carbone et d'hydrogène aboutissant au dépôt d'une couche mince de carbone type diamant (sp3) et de carbone type graphite trigonal (sp2). Un tel revêtement, connu en lui-même, améliore considérablement la pénétration de la pointe dans les caoutchoucs et dans les matières plastiques, et en particulier sans déchirure de la matière, ni de la carcasse de renfort des bandes transporteuses, la pointe pouvant dans ce cas être légèrement arrondie sans que, du fait du revêtement très glissant, la pénétration en souffre.

Le rivet-clou selon l'invention atteint ainsi sous toutes les formes exposées les objectifs fixés au départ par l'invention : proposer un rivet dont le rivetage puisse être effectué de façon simple et économique en main d'oeuvre, à partir d'un seul et même côté des matériaux à assembler, sans qu'il soit nécessaire de pratiquer des trous à l'avance dans tous les matériaux qu'il s'agit d'assembler.

## Revendications

1. Rivet comportant deux parties, formant deux pièces distinctes :
- une partie formant rivet creux présentant une tête (1) et une tige cylindrique (2) qui est raccordée à la tête dans le sens axial et dont l'extrémité située à l'opposé de l'extrémité portant la tête (1) comporte un espace cylindrique creux ménagé à l'intérieur de la tige cylindrique (2) dans le sens axial de celle-ci, sur au moins une partie de la longueur de la tige cylindrique (2), et
- une deuxième partie préassemblée avec la première partie formant rivet creux à l'extrémité de la tige cylindrique (2),
ledit rivet étant caractérisé en ce que la deuxième partie est une partie formant clou comportant une tige cylindrique creuse se prolongeant de façon conique pour former une pointe (4), la partie formant clou étant enfilée avec frottement par son extrémité ouverte opposée à son extrémité formant une pointe (4) sur la tige cylindrique (2) de la partie formant rivet creux.

2. Rivet selon la revendication 1, caractérisé en ce que la tige cylindrique (2) comporte un épaulement cylindrique extérieur (3) faisant saillie vers l'extérieur à une certaine distance de l'extrémité de la tige cylindrique (2), située à l'opposée de la tête (1).

3. Rivet selon la revendication 2, caractérisé en ce que les dimensions respectives de la partie formant clou, de la partie formant rivet creux et que la position de l'épaulement sur la tige cylindrique sont telles que la partie formant clou étant enfilée sur la tige cylindrique (2) de la partie formant rivet creux jusqu'à l'épaulement l'extrémité creuse de la tige cylindrique (2) se trouve enfilée à l'intérieur de la cavité cylindrique de la partie formant clou de façon telle que l'extrémité de la tige cylindrique (2) soit située approximativement à la naissance de la partie conique prolongeant la partie cylindrique de la cavité intérieure de la partie formant clou.

4. Rivet selon la revendication 1, caractérisé en ce que les dimensions respectives de la partie formant clou et de la partie formant rivet creux sont telles que, la partie formant clou étant enfilée sur la tige cylindrique (2) de la partie formant rivet creux, l'extrémité de la partie formant clou située à l'opposé de la pointe (4) soit en butée contre le côté inférieur de la tête (1) de la partie formant rivet creux et que l'extrémité de la tige cylindrique (2) soit située approximativement à la naissance de la partie conique prolongeant la partie cylindrique de la cavité intérieure de la partie formant clou.

5. Rivet selon la revendication 4, caractérisé en ce que le côté inférieur de la tête (1) de la partie formant rivet creux a une forme tronconique, dont l'effilement est orienté vers la tige cylindrique (2) les dimensions respectives de cette tête (1) de forme tronconique et de l'extrémité de la partie formant clou située à l'opposé de la pointe (4), étant telles que la partie formant clou enfilée sur la tige cylindrique (2) de la partie formant rivet creux se trouve en butée contre la partie plane située à l'extrémité de la partie effilée de la tête (1) de forme tronconique.

6. Rivet selon l'une quelconque des revendications 1 à 5 comprise, caractérisé en ce que lors de l'assemblage de la partie formant clou et de la partie formant rivet creux les cavités intérieures sont remplies d'un liquide approximativement incompressible, ou d'une matière approximativement incompressible, pâteuse ou plastique à température ambiante.

7. Rivet selon l'une des revendications 1 à 6 comprise, caractérisé en ce qu'une bille est placée dans la partie intérieure creuse de la partie formant clou en portant sur celle-ci sur une ligne de contact circulaire la partie conique de celle-ci, ainsi que sur l'extrémité de la tige cylindrique (2) située à l'opposé de la tête (1), lorsque la partie formant rivet creux et la partie formant clou sont enfilées l'une dans l'autre, la partie formant clou étant en butée contre l'épaulement (3), ou la tête (1) de la partie formant rivet creux.

8. Rivet selon l'une des revendications 1 à 7 comprise, caractérisé en ce que des zones de moindre épaisseur sont prévues, favorisant une déformation de la partie conique de la partie formant clou dans des directions choisies.

9. Rivet selon la revendication 8, caractérisé en ce que la déformation de la partie conique de la partie formant clou s'effectue préférentiellement vers l'extérieur.

10. Rivet selon la revendication 8, caractérisé en ce que la déformation de la partie conique de la partie formant clou s'effectue préférentiellement vers l'intérieur.

11. Rivet selon l'une des revendications 1 à 10, caractérisé par le fait que le rivet-clou est revêtu, au moins sur la partie conique de sa partie clou, d'une couche mince de carbone type diamant et/ou de graphite trigonal obtenue par dépôt chimique sous l'assistance d'un plasma.

12. Rivet selon l'une des revendications 1 à 10, caractérisé par le fait que le rivet-clou est revêtu, au moins sur la partie conique de sa partie clou, de nitrure de titane en couche mince déposé sous plasma.

13. Procédé de mise en oeuvre d'un rivet selon l'une des revendications 1 à 12 comprise, caractérisé en ce que ledit rivet est enfoncé successivement, dans toutes les épaisseurs, ou pièces, de matériaux ou pièces qu'il s'agit de riveter ensemble puis que la pointe de la partie formant clou du rivet étant écrasée par battage ou par compression, l'extrémité portant sur un support plat uni formant enclume, et l'extrémité de la partie de la tige cylindrique (2) se déformant ensuite en s'évasant et en venant se plaquer contre la partie intérieure de la partie formant clou elle-même déformée par l'écrasement de la partie formant clou, la longueur du rivet diminuant au cours de cette opération de formation d'une deuxième tête de façon telle que les matériaux et/ou pièces qu'il s'agit d'assembler se trouvent finalement solidement assemblés par pincement et blocage entre les deux têtes.

14. Procédé selon la revendication 13, caractérisé en ce que certains matériaux, ou pièces, qu'il s'agit d'assembler comportent des trous pratiqués à l'avance, certains de ces trous pouvant être renforcés par des rondelles ou des chemises.

15. Procédé de mise en oeuvre selon la revendication 13 ou 14, d'un rivet selon l'une des revendications 1 à 6 comprise et 9, caractérisé en ce que, lors du battage ou de la compression, la bille pincée entre la partie conique de la partie formant clou et l'extrémité de la tige cylindrique (2) située à l'opposé de la tête provoque l'évasement uniforme de cette extrémité et la déformation uniforme de la partie formant clou.

## Patentansprüche

1. Zweiteiliger Niet, bestehend aus zwei unterschiedlichen Einzelteilen, nämlich aus
- einem einen Rohrniet bildenden Teil, der einen Kopf (1) und einen mit diesem in axialer Richtung verbundenen zylindrischen Schaft (2) aufweist, an dessen dein Kopfende des Niets entgegengesetztes Ende ein sich axial im Inneren des zylindrischen Schafts (2) auf mindestens einen Teil dessen Länge erstreckender Hohlraum vorgesehen ist, und
- einem zweiten, mit dem ersten vormontierten und einen Rohrniet am Ende des zylindrischen Schafts (2) bildenden Teil,
wobei der besagte Niet dadurch gekennzeichnet ist, daß der zweite Teil als Nagel ausgebildet ist, der einen zwecks Ausbildung einer Spitze (4) konisch verlängerten zylindrischen Hohlschaft aufweist, wobei der den Nagel bildende Teil mit seinem offenen, dem eine Spitze (4) bildenden Ende entgegengesetzten Eiide auf den zylindrischen Hohlschaft (2) des den Hohlniet bildenden Teils mit Reibung aufgesteckt wird.

2. Niet nach Anspruch 1, dadurch gekennzeichnet, daß der zylindrische Schaft (2) einen zylindrischen Außenabsatz (3) aufweist, der in einem gewissen Abstand von dem dem Kopf (1) entgegengesetzten Ende des zylindrischen Schafts (2) einen Vorsprung nach außen bildet.

3. Niet nach Anspruch 2, dadurch gekennzeichnet daß die jeweiligen Maße des den Nagel bildenden und des den Hohlniet bildenden Teils sowie die Lage des Absatzes auf dem zylindrischen Schaft (2) derart gewählt sind, daß - wenn der den Nagel bildende Teil auf dem zylindrischen Schaft (2) des den Hohlniet bildenden Teils bis zum Absatz aufgesteckt ist - das hohle Ende des zylindrischen Schafts (2) derart im Inneren des zylindrischen Hohlraums des den Nagel bildenden Teils eingesteckt ist, daß das Ende des zylindrischen Schafts (2) sich ungefähr auf Höhe des Anfangs des konischen Bereichs befindet, der den zylindrischen Bereich des inneren Hohlraums des den Nagel bildenden Teils verlängert.

4. Niet nach Anspruch 1, dadurch gekennzeichnet, daß die jeweiligen Maße des den Nagel bildenden und des den Hohlniet bildenden Teils derart gewählt sind, daß - wenn das den Nagel bildende Teil auf dem zylindrischen Schaft (2) des den Hohlniet bildenden Teils aufgesteckt ist - das der Spitze (4) entgegengesetzte Ende des den Nagel bildenden Teils im Anschlag gegen die Unterseite des Kopfes (1) des den Hohlniet bildenden Teils gerät, und daß das Ende des zylindrischen Schafts (2) sich ungefähr auf Höhe des Anfangs des konischen Bereichs befindet, der den zylindrischen Bereich des inneren Hohlraums des den Nagel bildenden Teils verlängert.

5. Niet nach Anspruch 4, dadurch gekennzeichnet, daß die Unterseite des Kopfes (1) des den Hohlniet bildenden Teils in Form eines Kegelstumpfes mit Verjüngung in Richtung des zylindrischen Schafts (2) ausgebildet ist, wobei die jeweiligen Maße dieses kegelstumpfförmigen Kopfes (1) und des der Spitze (4) entgegengesetzten Endes des den Nagel bildenden Teils derart gewählt sind, daß das den Nagel bildende, auf dem zylindrischen Schaft (2) des den Hohlniet bildenden Teils aufgesteckte Teil in Anschlag gegen den planen Teil am Ende des verjüngten Teils des kegelstumpfförmigen Kopfes (1) gerät.

6. Niet nach einem beliebigen der Ansprüche 1 bis 5, dadurch gekennzeichnet, daß beim Zusammenfügen des den Nagel bildenden Teils und des den Hohlniet bildenden Teils die inneren Hohlräume mit einer annähernd inkompressiblen Flüssigkeit oder einem annähernd inkompressiblen, bei Raumtemperatur pastösen oder plastischen Stoff gefüllt sind.

7. Niet nach einem der Ansprüche 1 bis 6, dadurch gekennzeichnet, daß in dem inneren Hohlraum des den Nagel bildenden Teils sich eine Kugel befindet, welche dessen konischen Bereich und das dem Kopf (1) entgegengesetzte Ende des zylindrischen Schafts (2) auf einer kreisförmigen Kontaktlinie berührt, wenn der den Hohlniet bildende Teil und der den Nagel bildende Teil derart ineinander eingesteckt sind, daß der den Nagel bildende Teil sich in Anschlag gegen den Absatz (3) oder den Kopf (1) des den Hohlniet bildenden Teils befindet.

8. Niet nach einem der Ansprüche 1 bis 7, dadurch gekennzeichnet, daß Bereiche geringerer Stärke vorgesehen sind, welche eine Verformung des konischen Bereichs des den Nagel bildenden Teils in ausgesuchte Richtungen fördern.

9. Niet nach Anspruch 8, dadurch gekennzeichnet, daß die Verformung des konischen Bereichs des den Nagel bildenden Teils bevorzugt nach außen stattfindet.

10. Niet nach Anspruch 8, dadurch gekennzeichnet, daß die Verformung des konischen Bereichs des den Nagel bildenden Teils bevorzugt nach innen stattfindet.

11. Niet nach einem der Ansprüche 1 bis 10, dadurch gekennzeichnet, daß der Nagelniet in mindestens dem konischen Bereich des Nagelteils mit einer feinen, als chemischer Niederschlag mit Hilfe eines Plasmas hergestellten Schicht von diamantartigem Karbon und/oder trigonalem Graphit überzogen ist.

12. Niet nach einem der Ansprüche 1 bis 10, dadurch gekennzeichnet, daß der Nagelniet in mindestens dem konischen Bereich des Nagelteils mit einer unter Plasma abgelagerten Dünnschicht Titannitrid überzogen ist.

13. Verfahren zur Einsetzung eines Niets nach einem der Ansprüche 1 bis einschließlich 12, dadurch gekennzeichnet, daß der besagte Niet nacheinander durch alle zu vernietenden Schichten, Materialien oder Teile getrieben wird und die Spitze des den Nagel des Niets bildenden Teils dann durch Schlagen oder Zusammenpressen gegen eine ebene, amboßbildende, flache Auflage zusammengedrückt wird, wonach das Ende des Teils des zylindrischen Schafts (2) sich aufweitend verformt und dabei gegen die durch das Stauchen des den Nagel bildenden Teils selbst bereits verformte Innenfläche desselben gedrückt wird, wobei die Länge des Niets während dieses Prozesses der Ausbildung eines zweiten Kopfes derart abnimmt, daß die zusammenzufügenden Materialien und/oder Teile schließlich durch Zusammendrücken und Festklemmen zwischen den beiden Köpfen fest miteinander verbunden sind.

14. Verfahren nach Anspruch 13, dadurch gekennzeichnet, daß in bestimmte zusammenzufügende Materialien oder Teile bereits Löcher vorgesehen sind, wobei bestimmte Löcher mit Scheiben oder einem Futter verstärkt sein können.

15. Verfahren zum Einsetzen nach Anspruch 13 oder 14 eines Niets nach einem der Ansprüche 1 bis einschließlich 6 und 9, dadurch gekennzeichnet, daß während des Schlagens oder Zusammenpressens die zwischen dem konischen Teil des den Nagel bildenden Teils und dem dem Kopf entgegengesetzte Ende des zylindrischen Schafts (2) eingeklemmte Kugel die gleichmäßige Aufweitung dieses Endes und die gleichmäßige Verformung des den Nagel bildenden Teils verursacht.

## Claims

1. Rivet comprising two parts forming two separate pieces:
- a hollow rivet part having a head (1) and a cylindrical stem (2) connected axially to the head, the end of which, located opposite to the end carrying the head (1) comprises a hollow cylindrical space provided inside the cylindrical stem (2) in the axial direction of this latter, over at least part of the length of the cylindrical stem (2), and
- a second part pre-assembled with the first part forming hollow rivet at the end of the cylindrical stem (2),
said rivet being characterised by the fact that the second part is a part forming nail, and comprising a hollow cylindrical stem extending taperwise to form a nib (4), the nail part being frictionally threaded by its open end opposite to its end forming a nib (4), over the cylindrical stem (2) of the hollow rivet part.

2. Rivet according to claim 1, characterised by the fact that the cylindrical stem (2) comprises an external cylindrical shoulder (3) projecting outwardly at a certain distance from the end of the cylindrical stem (2), located opposite the head (1).

3. Rivet according to claim 2, characterised by the fact that the respective dimensions of the nail part, of the hollow rivet part and of the shoulder position on the cylindrical stem, are such that while the nail part is threaded over the cylindrical stem (2) of the hollow rivet part upto the shoulder, the hollow end of the cylindrical stem (2) is threaded inside the cylindrical cavity of the nail part in such a way that the end of the cylindrical stem (2) is positioned approximately at the origin of the conical part extending the cylindrical part of the internal cavity of the nail part.

4. Rivet according to claim 1, characterised by the fact that the respective dimensions of the nail part and of the hollow rivet part are such that, while the nail part is threaded over the cylindrical stem (2) of the hollow rivet part, the end of the nail part located opposite the nib (4) is in abutment against the lower side of the head (1) of the hollow rivet part, and the end of the cylindrical stem (2) is located approximately at the origin of the conical part extending the cylindrical part of the internal cavity of the nail part.

5. Rivet according to claim 4, characterised by the fact that the lower side of the head (1) of the hollow rivet part is truncate shaped, with a tapering directed towards the cylindrical stem (2) the respective dimensions of this truncate shaped head (1) and of the end of the nail part located opposite the nib (4) being such that, while the nail part is threaded over the cylindrical stem (2) of the hollow rivet part, it abuts against the plane part located at the end of the tapered part of the truncate shapes head (1).

6. Rivet according to anyone of the claims 1 to 5 included, characterised by the fact that during the assembly of the nail part and of the hollow rivet part, the internal cavities are filled with an approximately uncompressible liquid, or with an approximately uncompressible material, either pasty or plastic at the room temperature.

7. Rivet according to claims 1 to 6 included, characterised by the fact that a ball is placed in the hollow internal part of the nail part, bearing on this latter over a circular contact line, the conical part of this latter, and on the end of the cylindrical stem (2) located opposite the head (1), when the hollow rivet part and the nail part are threaded one inside the other, the nail part being in abutment against the shoulder (3) or the head (1) of the hollow rivet part.

8. Rivet according to one of the claims 1 to 7 included, characterised by the fact that areas of reduced thickness are provided, whereby a distortion of the conical part of the nail part is promoted towards selected directions.

9. Rivet according to claim 8, characterised by the fact that the distortion of the conical part of the nail part is carried out preferentially outwardly.

10. Rivet according to claim 8, characterised by the fact that the distortion of the conical part of the nail part is carried out preferentially inwardly.

11. Rivet according to one of the claims 1 to 10, characterised by the fact that the rivet-nail is coated, at least over the conical part of its nail part, with a thin layer of a diamond type carbon and/or of trigonal graphite carbon, obtained by plasma aided chemical deposit.

12. Rivet according to one of the claims 1 to 10, characterised by the fact that the rivet-nail is coated, at least over the conical part of its nail part, with a thin layer of titanium nitride deposited by plasma.

13. Method for the implementation of a rivet according to one of the claims 1 to 12 included, characterised by the fact that the said rivet is driven successively in all the thicknesses or pieces, of materials or pieces which have to be assembled by riveting, and that while the nib is then crushed by hammering or by compression, the end bearing on an even and flat anvil shaped support, the end of the part of the cylindrical stem (2) is distorted enlarged and flattened against the internal part of the nail part, which is itself distorted by the crushing of the nail part, the rivet length decreasing during the formation of the second head in such a way that the materials and/or the pieces which have to be assembled are finally solidly assembled by pinching and blocking between the two heads.

14. Method according to claim 13, characterised by the fact that certain materials or pieces that have to be assembled comprise holes provided previously, some of these holes being reinforced by means of washers or of linings.

15. Method of implementation according to claims 13 or 14, of a rivet according to claims 1 to 6 included and to claim 9, characterised by the fact that during the hammering or the compression, the ball pinched between the conical part of the nail part and the end of the cylindrical stem (2) located opposite the head enlarges evenly this end and distorts evenly the nail part.
